# DEMANDE DE BREVET EUROPEEN

(11) **EP 1 443 778 A1**
(43) Date de publication de la demande: **04.08.2004**
(21) Numéro de dépôt: 04290162.9
(22) Date de dépôt: 21.01.2004
(51) Int. Cl.: H04Q 7/20, H04Q 7/38

(54) **Procédé pour optimiser les performances d'un système de radiocommunications mobiles**

(30) Priorité: 29.01.2003 FR 0301017
(71) Demandeur: EVOLIUM S.A.S., 75008 Paris (FR)
(72) Inventeur: Bourdeaut, Stanislas, 75015 Paris (FR)
(74) Mandataire: El Manouni, Josiane

(57) **Abrégé**

Procédé pour optimiser les performances d'un système de radiocommunications mobiles, dans lequel différents modes de transfert sont possibles, correspondant à différents débits possibles correspondant eux-mêmes à différents schémas de modulation possibles, et dans lequel l'architecture de protocoles utilise une couche RLC de contrôle de lien radio pouvant opérer en mode acquitté ou en mode non acquitté, procédé dans lequel, dans un mode de transfert correspondant à des débits possibles les plus élevés, des informations d'acquittement sont transmises, dans un mode non acquitté, d'un récepteur RLC vers un émetteur RLC et peuvent être prises en compte par l'émetteur RLC.

## Description

La présente invention concerne d'une manière générale les systèmes de radiocommunications mobiles.

Dans ces systèmes, divers traitements sont nécessaires pour mettre les informations à transmettre sous une forme adaptée à leur transmission sur l'interface radio.

Notamment, une protection contre les erreurs de transmission est obtenue au moyen d'un codage (tel que notamment un codage correcteur d'erreurs) destiné à introduire une redondance dans les informations transmises. Le taux de codage est défini comme le rapport du nombre de bits d'information à transmettre sur le nombre de bits transmis ou bits codés. Le codage est généralement opéré sur des séquences de bits d'information ou blocs. Pour des ressources radio allouées données, plus le taux de codage est élevé, et plus le débit de bits d'information est élevé. Cependant, un taux de codage élevé nécessite de bonnes conditions radio, sinon la qualité de service est dégradée.

Pour des services de données, une protection supplémentaire contre les erreurs de transmission est généralement prévue, consistant généralement en une re-transmission de blocs non correctement reçus, selon une technique appelée aussi ARQ (pour "Automatic Repeat reQuest" en anglais). Les blocs non correctement reçus peuvent être des blocs dans lesquels des erreurs sont détectées (au moyen d'un code détecteur d'erreurs), ou ne peuvent être corrigées (au moyen d'un code correcteur d'erreurs). L'état, correct ou non, des blocs reçus est signalé par le récepteur à l'émetteur au moyen de messages dits d'acquittement / non-acquittement ou messages ACK/NACK (où ACK est utilisé pour "ACKnowledgment"et NACK est utilisé pour "Non-ACKnowledgment"). Un tel mode de fonctionnement est aussi appelé mode acquitté (ou « acknowledged mode » en anglais). Il est aussi possible d'utiliser un mode non acquitté (ou « unacknowledged mode » en anglais), notamment pour des applications, telles que par exemple des applications temps-réel, où les délais introduits par ces mécanismes de re-transmission et d'acquittement ne seraient pas acceptables. En outre, pour une meilleure efficacité, les acquittements/non-acquittements sont généralement regroupés dans un même message ACK/NACK pour un ensemble de blocs successifs. Un message ACK/NACK comporte alors un ensemble de bits (ou « bitmap » en anglais), dont chacun est utilisé pour l'acquittement /non acquittement d'un de ces blocs. Par exemple, une valeur de bit à 0 peut être utilisée pour indiquer qu'un bloc n'a pas été correctement reçu, et inversement une valeur de bit à 1 peut être utilisée pour indiquer qu'un bloc a été correctement reçu.

Un autre traitement consiste en une modulation, permettant d'obtenir un signal analogique porteur des informations à transmettre. Différentes techniques de modulation sont connues, caractérisées par leur efficacité spectrale, c'est-à-dire leur capacité à transmettre un nombre plus ou moins élevé de bits par symbole, pour une même bande de fréquences allouée. Par exemple, dans le système GPRS (pour "General Packet Radio Service" en anglais) une seule modulation est possible, la modulation GMSK qui permet de transmettre un bit par symbole, et dans le système EGPRS (pour "Enhanced General Packet Radio Service") deux modulations sont possibles, la modulation GMSK qui permet de transmettre un bit par symbole et la modulation 8PSK qui permet de transmettre trois bits par symbole. Plus l'efficacité spectrale de la modulation est élevée, et plus le débit de bits transmis peut être élevé. Cependant, une efficacité spectrale élevée nécessite de bonnes conditions radio, sinon la qualité de service est dégradée.

Différentes techniques destinées à optimiser les performances de ces systèmes peuvent être utilisées, telles que notamment la technique d'adaptation de lien (ou « link adaptation » en anglais). Cette technique permet d'adapter dynamiquement le schéma de codage et/ou de modulation utilisé en fonction des conditions radio; notamment, lorsque les conditions radio sont bonnes, on peut augmenter le taux de codage et/ou utiliser une modulation à plus haute efficacité spectrale, pour augmenter le débit; par exemple quatre schémas de codage (CS1 à CS4) sont possibles dans le système GPRS , et neuf schémas de codage et de modulation (MCS1 à MCS9) sont possibles dans le système EGPRS.

Généralement, la qualité d'une liaison radio est représentée par un ou plusieurs indicateurs de qualité tels que notamment le BER brut (ou "raw Bit Error Rate" en anglais), le BLER (pour "Block Erasure Rate" en anglais), le SIR (pour "Signal-to-Interference Ratio" en anglais), ...etc. Le BLER correspond au taux de blocs de données non correctement reçus. Lorsqu'on utilise la technique de re-transmission, le BLER peut aussi, à la différence des autres indicateurs de qualité, être déterminé en émission, à partir des messages ACK/NACK transmis par le récepteur. Les algorithmes tels que par exemple les algorithmes d'adaptation de lien (ou encore les algorithmes de re-sélection de cellule) étant généralement mis en oeuvre dans le réseau, le réseau peut ainsi lui-même déterminer le BLER, pour le sens descendant, sans qu'il soit nécessaire que la station mobile reporte au réseau la valeur de BLER qu'elle détermine.

D'une manière générale, les systèmes de radiocommunications mobiles font l'objet de normalisation, et pour une description complète de ces sytèmes on pourra se référer aux normes correspondantes, publiées par les organismes de normalisation correspondants.

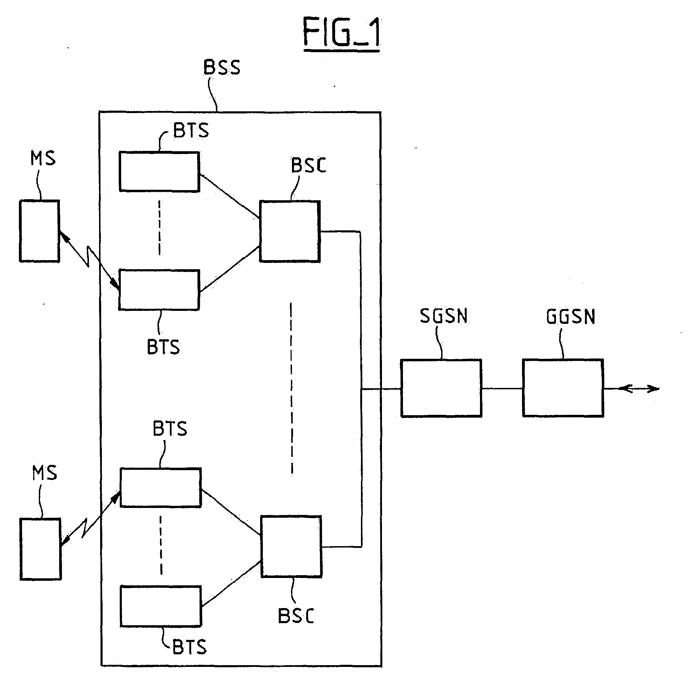

L'architecture générale des systèmes de type GPRS est rappelée sur la figure 1, elle comporte essentiellement :
- un sous-système de stations de base, ou BSS ("Base Station Subsystem"), en relation avec des stations mobiles ou MS (« Mobile Station »), et comportant des stations de base ou BTS ("Base Transceiver Station") et des contrôleurs de stations de base ou BSC ("Base Station Controller"),
- un sous-système de réseau GPRS, en relation d'une part avec le BSS et d'autre part avec des réseaux extérieurs (non illustrés), et comportant des entités ou noeuds de sous-système de réseau GPRS, telles que les entités SGSN ("Serving GPRS Support Node") ou GGSN (« Gateway GPRS Support Node ».

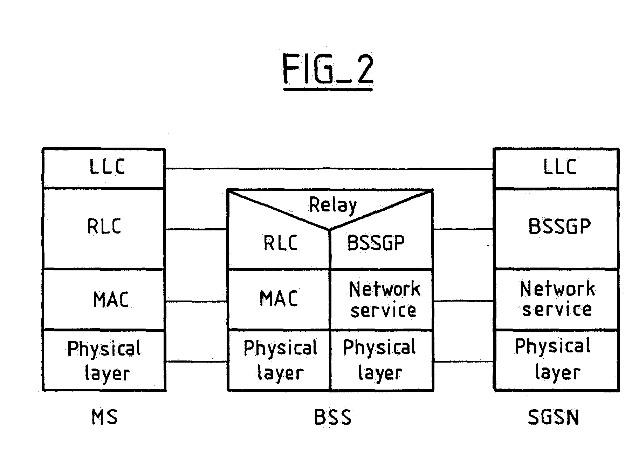

Selon l'architecture en couches utilisée pour décrire ces systèmes, comme rappelé sur la figure 2, on distingue, sur l'interface entre MS et BSS, ou interface radio, ou interface « Um »:
- une première couche, ou couche physique,
- une deuxième couche, ou couche liaison, elle-même divisée en plusieurs couches: par ordre de niveaux croissants, MAC (« Medium Access Control »), RLC (« Radio Link Control ») et LLC (« Logical Link Control », le BSS n'étant utilisé que pour une fonction de relais entre MS et sous-système de réseau GPRS, pour la couche LLC).

De même, on distingue, sur l'interface entre BSS et sous-système de réseau GPRS, ou interface « Gb »:
- une première couche, ou couche physique,
- une deuxième couche, ou couche liaison, elle-même divisée en plusieurs couches : par ordre de niveaux croissants, « Network service », BSSGP (« BSS GPRS Protocol»), et LLC (« Logical Link Control », le BSS n'étant utilisé que pour une fonction de relais entre MS et sous-système de réseau GPRS, pour la couche LLC).

En outre, des protocoles de signalisation de niveau supérieur (non illustrés spécifiquement sur cette figure) sont également prévus, notamment pour la gestion de la mobilité ou MM (« Mobility Management»), la gestion de session ou SM (« Session Management»), ... etc.

Des trames appelées trames LLC sont formées, dans la couche LLC, à partir d'unités de données de niveau supérieur. Dans les trames LLC ces unités de données sont appelées unités de données LLC-PDU (« LLC-Protocol Data Units »).

Les unités de données LLC-PDU sont ensuite segmentées dans la couche RLC/MAC, de manière à former des blocs appelés blocs de données RLC (« RLC data blocks »). Les blocs de données RLC sont ensuite mis au format requis pour transmission sur l'interface « Um », dans la couche physique.

En outre, dans les couches RLC et LLC sont généralement mises en oeuvre des procédures de re-transmission de données non correctement reçues (blocs de données RLC ou unités de données LLC-PDU selon le cas), selon la technique ARQ ("Automatic Repeat reQuest") rappelée précédemment.

Dans ce qui suit, on s'intéresse plus particulièrement, à titre d'exemple, au cas de la couche RLC, dans le système GPRS. Pour cet exemple, on pourra se référer à la spécification 3GPP 44.060. Notamment, selon cette spécification, un message ACK/NACK contient un numéro de séquence de départ, ou SSN (pour « Starting Sequence Number »), et un « bitmap » de blocs reçus, ou RBB (pour « Received Block Bitmap »).

Comme rappelé précédemment, la normalisation du GPRS a évolué, notamment avec l'introduction de l'EGPRS (« Enhanced General Packet Radio Service ») qui autorise des débits très supérieurs à ceux offerts par le GPRS. Cependant, au sein d'un même système, toutes les stations mobiles et tous les équipements de réseau ne supportent pas nécessairement l'EGPRS. On distingue ainsi deux modes possibles pour un TBF (ou connexion temporaire en mode paquet, ou « Temporary Block Flow ») : un TBF en mode GPRS et un TBF en mode EGPRS.

Dans la version actuelle de la spécification 3GPP 44.060 (3GPP TS 44.060 V6.0.0 (2002-12), il est indiqué que:
- pour un TBF en mode GPRS, le SSN et le RBB sont transmis en mode RLC non acquitté et en mode RLC acquitté, et le SSN et le RBB peuvent être ignorés par l'émetteur RLC en mode non acquitté,
- pour un TBF en mode EGPRS, le SSN et le RBB sont transmis en mode RLC non acquitté et en mode RLC acquitté, et le SSN et le RBB doivent être ignorés par le récepteur RLC en mode non acquitté.

Ainsi que l'a observé le demandeur, des problèmes se posent dans l'état actuel de cette spécification.

Tout d'abord, il est supposé que, dans les termes de cette spécification rappelés ci-dessus, le terme « récepteur RLC » , dans le cas du mode EGPRS, devrait être corrigé par « émetteur RLC » . Un problème se pose cependant, même avec une telle correction, comme réalisé par le demandeur. En effet, selon les termes actuels de cette spécification, rien n'oblige un récepteur RLC (notamment, pour le sens descendant, une station mobile) à transmettre des informations SSN et RBB valides, puisque ces informations sont ignorées par l'émetteur RLC (notamment, pour le sens descendant, un équipement de réseau). Or, les informations SSN et RBB ont tout intérêt à être valides et à être prises en compte par le récepteur RLC. Par exemple, ces informations pourraient être utilisées pour réaliser une estimation de qualité de transmission, notamment lorsqu'une technique d'adaptation de lien est utilisée, comme rappelé précédemment.

La présente invention a notamment pour but de résoudre tout ou partie de ces problèmes et/ou éviter tout ou partie de ces inconvénients. Plus généralement, la présente invention a pour but d'optimiser les performances de ces systèmes.

Un des objets de la présente invention est un procédé pour optimiser les performances d'un système de radiocommunications mobiles, dans lequel différents modes de transfert sont possibles, correspondant à différents débits possibles correspondant eux-mêmes à différents schémas de modulation possibles, et dans lequel l'architecture de protocoles utilise une couche RLC de contrôle de lien radio pouvant opérer en mode acquitté ou en mode non acquitté, procédé dans lequel, dans un mode de transfert correspondant à des débits possibles les plus élevés, des informations d'acquittement sont transmises, dans un mode non acquitté, d'un récepteur RLC vers un émetteur RLC et peuvent être prises en compte par l'émetteur RLC.

Suivant une autre caractéristique, différents modes de transfert incluent les modes GPRS (« General Packet Radio Service ») et EGPRS (« Enhanced General Packet Radio Service »).

Suivant une autre caractéristique, lesdites informations d'acquittement comportent un numéro de séquence de départ, ou SSN (pour « Starting Sequence Number »), et un « bitmap » de blocs reçus, ou RRB (pour « Received Block Bitmap ») transmis dans un message ACK/NACK d'acquittement/non acquittement.

Suivant une autre caractéristique, lesdites informations d'acquittement sont prises en compte par un émetteur RLC pour réaliser une estimation de qualité de transmission.

Suivant une autre caractéristique, ladite estimation de qualité de transmission est utilisée pour réaliser une adaptation de lien radio.

Un autre objet de l'invention est une station mobile, comportant des moyens pour mettre en oeuvre un procédé suivant l'invention.

Un autre objet de l'invention est un équipement de réseau de radiocommunications mobiles, comportant des moyens pour mettre en oeuvre un procédé suivant l'invention.

Un autre objet de l'invention est un système de radiocommunications mobiles, comportant des moyens pour mettre en oeuvre un procédé suivant l'invention.

D'autres objets et caractéristiques de la présente invention apparaîtront à la lecture de la description suivante d'un exemple de réalisation , faite en relation avec les dessins ci-annexés dans lesquels:
- la figure 1 rappelle l'architecture générale d'un système de radiocommunications mobiles en mode paquet,
- la figure 2 rappelle l'architecture de protocole utilisée dans un système du type rappelé sur la figure 1,
- la figure 3 est un schéma destiné à illustrer un exemple d'utilisation d'un procédé suivant l'invention.

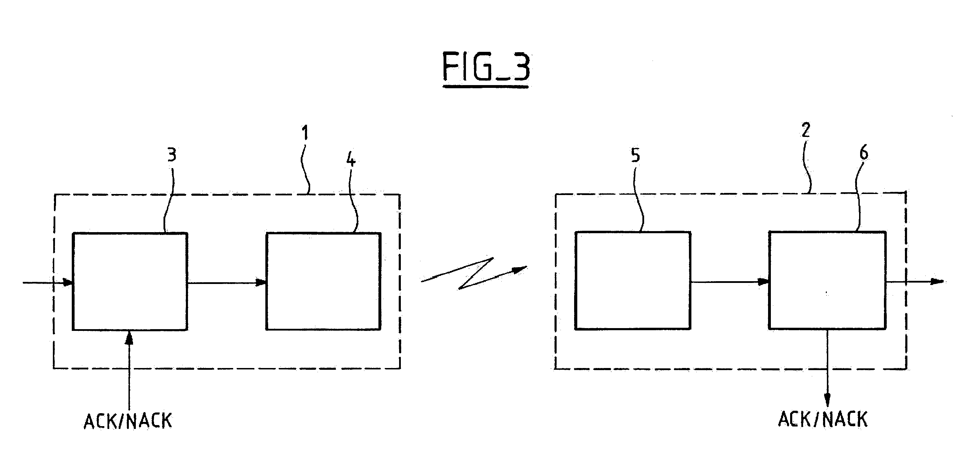

Une liaison radio entre un émetteur RLC et un récepteur RLC dans un système de radiocommunications mobile est illustrée schématiquement à titre d'exemple sur la figure 3. Par exemple, l'émetteur RLC, noté 1, peut être dans une station mobile et le récepteur RLC, noté 2, dans le réseau. La liaison est alors une liaison montante (ou "uplink" en anglais). Inversement l'émetteur 1 peut-être dans le réseau et le récepteur 2 dans une station mobile. La liaison est alors une liaison descendante (ou "downlink" en anglais).

L'émetteur 1 comporte, dans l'exemple illustré:
- des moyens 3 de traitement en émission, incluant des fonctions telles que codage, modulation, ...etc.,
- des moyens 4 d'émission radio-fréquence.

Le récepteur 2 comporte, dans l'exemple illustré:
- des moyens 5 de réception radio-fréquence,
- des moyens 6 de traitement en réception, réalisant notamment des fonctions telles que décodage, démodulation, ...etc.

Les moyens de traitement 6 incluent également, en mode acquitté ou non acquitté, une fonction d'élaboration de messages ACK/NACK (ces messages incluant des informations d'acquittement telles que par exemple les informations SSN et RBB rappelées précédemment) et de transmission de ces messages à l'émetteur 1.

Les moyens de traitement 3 incluent également, en mode acquitté, une fonction de re-transmission de blocs non correctement reçus (sous la commande de messages ACK/NACK reçus du récepteur 2).

En mode non acquitté, dans l'état actuel de la spécification rappelée précédemment, les informations d'acquittement telles que notamment les informations SSN et RBB peuvent être ignorées par les moyens de traitement 3 de l'émetteur 1 dans le cas de TBF en mode GPRS, et doivent être ignorées par les moyens de traitement 3 de l'émetteur 1 dans le cas de TBF en mode EGPRS.

La présente invention suggère que les informations d'acquittement telles que notamment les informations SSN et RBB puissent être prises en compte en mode non acquitté, dans le cas de TBF en mode EGPRS. Ceci permet d'optimiser les performances du système ; notamment, comme indiqué précédemment, ces informations peuvent être prises ne compte pour réaliser une estimation de qualité de transmission, notamment dans le cas où un algorithme d'adaptation de lien est utilisé.

La présente invention a également pour objet une station mobile, un équipement de réseau de radiocommunications mobiles, et un système de radiocommunications mobiles, comportant des moyens pour mettre en oeuvre un procédé suivant l'invention.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour optimiser les performances d'un système de radiocommunications mobiles, dans lequel différents modes de transfert sont possibles, correspondant à différents débits possibles correspondant eux-mêmes à différents schémas de modulation possibles, et dans lequel l'architecture de protocoles utilise une couche RLC de contrôle de lien radio pouvant opérer en mode acquitté ou en mode non acquitté, procédé dans lequel, dans un mode de transfert correspondant à des débits possibles les plus élevés, des informations d'acquittement sont transmises, dans un mode non acquitté, d'un récepteur RLC vers un émetteur RLC et peuvent être prises en compte par l'émetteur RLC.

2. Procédé selon selon la revendication 1, dans lequel différents modes de transfert incluent les modes GPRS (« General Packet Radio Service ») et EGPRS (« Enhanced General Packet Radio Service »).

3. Procédé selon l'une des revendications 1 ou 2, dans lequel lesdites informations d'acquittement comportent un numéro de séquence de départ, ou SSN (pour « Starting Sequence Number »), et un « bitmap » de blocs reçus, ou RRB (pour « Received Block Bitmap ») transmis dans un message ACK/NACK d'acquittement/non acquittement.

4. Procédé selon l'une des revendications 1 à 3, dans lequel lesdites informations d'acquittement sont prises en compte par un émetteur RLC pour réaliser une estimation de qualité de transmission.

5. Procédé selon la revendication 4, dans lequel ladite estimation de qualité de transmission est utilisée pour réaliser une adaptation de lien radio.

6. Station mobile, comportant des moyens pour mettre en oeuvre un procédé selon l'une des revendications 1 à 5.

7. Equipement de réseau de radiocommunications mobiles, comportant des moyens pour mettre en oeuvre un procédé selon l'une des revendications 1 à 5.

8. Système de radiocommunications mobiles, comportant des moyens pour mettre en oeuvre un procédé selon l'une des revendications 1 à 5.
